Europäisches Patentamt

European Patent Office

Office européen des brevets

(11) Publication number: **0 235 859 B1**

# EUROPEAN PATENT SPECIFICATION

(45) Date of publication of patent specification: **09.09.92**    (51) Int. Cl.5: **H02H 7/22**, H02H 5/08

(21) Application number: **87200299.3**

(22) Date of filing: **23.02.87**

(54) **Shock protective circuit with mechanical latch for small appliances.**

(30) Priority: **28.02.86 US 835125**

(43) Date of publication of application:
**09.09.87 Bulletin  87/37**

(45) Publication of the grant of the patent:
**09.09.92 Bulletin  92/37**

(84) Designated Contracting States:
**DE FR GB**

(56) References cited:
**EP-A- 0 026 571**
**EP-A- 0 088 390**
**EP-A- 0 126 777**
**EP-A- 0 139 301**

(73) Proprietor: **North American Philips Corporation**
**100 East 42nd Street 9th Floor**
**New York, N.Y. 10017(US)**

(72) Inventor: **Madsen, Elmer Wilbur**
**c/o INT. OCTROOIBUREAU B.V. Prof. Holstlaan 6**
**NL-5656 AA Eindhoven(NL)**

(74) Representative: **Gorter, Willem Karel et al**
**INTERNATIONAAL OCTROOIBUREAU B.V.**
**Prof. Holstlaan 6**
**NL-5656 AA Eindhoven(NL)**

# Description

## BACKGROUND OF THE INVENTION

### Field of the Invention

The invention pertains to the field of shock protection circuits in general and in particular to immersion detection current interrupter circuits designed to protect the user of a small hand-held electrical appliance from a serious electrical shock if the appliance is immersed in or otherwise comes into contact with an electrically conductive fluid.

### Description of the Prior Art

Shock protective circuits known in the prior art are of two types, ground fault current interrupter circuits (GFCI) and immersion detection current interrupter circuits. Various devices incorporating such circuits are also known in the prior art. GFCI devices are presently required in new electrical installations in bathrooms and other locations. Typically, such devices are included in an assembly connected to an electrical outlet.

Prior art shock protection circuits are designed primarily for electrical devices of substantial size and cost. They tend to be sophisticated, complex devices which, while of substantial economic and safety value, are not appropriate for the volume and variety of inexpensive consumer products in the field of hand-held small electrical appliances. Typical of the prior patent art are the ground fault current interrupting devices disclosed in U.S. Patent Nos. 4,345,289 and 4,358,70 for use in residential applications. A typical industrial hazard protection device is disclosed in U.S. Patent No.4,103,319. Such devices are inappropriate in terms of size, complexity and cost for small consumer appliances.

Shock protection is presently required for wall-mounted hair dryers under UL 859, which is presently a limited standard of dubious value. For example U.S. Patent No.4,493,975 discloses a wall-mounted hand-held hair dryer. The principal power switch for the appliance is contained in the wall-mounted housing. When the appliance is removed from the wall mount, this switch is in the "off" position and no power flows to the appliance. Thus, if the appliance should accidentally or intentionally be immersed in a conductive fluid, it is electrically dead and no shock hazard is present. It thus satisfies the present UL standard 859. To turn on power to the appliance, the user must activate a switch in the wall mount. Simply returning the hand held dryer to the the wall mount turns the switch off The problem with this prior art device and the UL standard itself is that there is no protection from electrical shock when the power switch is in the "on" position.

Nevertheless, the nearest prior art is European Patent Application 0 088 390 which discloses a shock protection circuit for use in a small, hand-held electrical appliance, the circuit being capable of detecting a leakage current caused by a conductive fluid and, as a consequence, disconnecting a supply voltage from the electrical appliance. For detecting the leakage current the circuit comprises a sensor means, whose resistance changes in case of a leakage current, while for disconnecting the supply voltage the circuit is provided with a means to interupt comprising a thyristor and a switch, the thyristor being controlled by the resistance of the sensor means and the switch being controlled by the thyristor, and a means to latch incorporated in the switch. Additionally the circuit comprises a means to limit a leakage current which means is embodied by two resistors. However, the circuit is inappropriate in terms of complexity and use, since the means to interrupt comprises a complex circuit and the means to latch is difficult to reset.

In conclusion, the prior art fails to disclose a simple, inexpensive circuit embodied in a small component device which serves to protect the user of a small electrical appliance from electrical shock if the appliance comes into contact with an electrically conductive fluid such as water. The most frequent hazard of this type is the use of hair dryers in a bathroom. When a personal care appliance such as a hair dryer or electric razor come into contact with water, the user may receive an electrical shock which can be fatal. The object of the present invention is to protect the user from a ser ious shock (above .005 amps) while meeting, or exceeding, the requirements of UL 859, paragraph 28.1, and equivalent standards either now in force or to be inforce in the near future.

## SUMMARY OF THE INVENTION

The present invention is a simple, reliable, inexpensive immersion detection current interrupter circuit to provide shock protection when a hand-held small appliance comes into electrical contact with an electrically conductive fluid such as water, designed to be packaged as a small component for inclusion within such an appliance or the plug of its power cord . When the appliance is plugged into an electrical power source such as a wall outlet and is immersed in or otherwise comes into electrical contact with a conductive fluid, there will be a current leakage. The circuit utilizes a sensor to detect this leakage current. When a leakage current is detected over a certain threshold, the relay breaks the load leads, causing the relay to mechanically latch in an open position. After the relay latches, no current will flow to the appliance.

The object of the invention is to provide a simple, reliable, inexpensive shock prevention circuit which will limit the maximum current leakage to .005 amps after 0.25 seconds. Used in conjunction with a leakage sensor, the relay (or solenoid) and mechanical latch circuit of the present invention achieves this object. A sensor wire is placed throughout the housing and near the two power wires in the appliance. The sensor is connected through a relay or solenoid and a pair of diodes to the load leads. Both when the appliance is connected to (plugged into) a power source and the sensor comes into contact with a conductive fluid, the sensor provides a short path to ground with low resistance forthe relay (or solenoid) current. The lead to the sensor causes the relay to operate, disconnecting the power leads, and a mechanical latch holds the relay contacts open. If current flows through the sensor, it is limited to a safe value by design of the relay coil in the first embodiment. The relay (or solenoid) requires, at most, .005 amps to pull in and the leakge current will be interrupted in less than .025 seconds, meeting the standard of les then 5 mA maximum after .025 seconds. The sensor latches the relay contacts whether the ac line is high or low. In a first embodiment, when the relay contacts mechanically latch, the coil keeps a low current on the sensor no matter how the plug is put in an outlet (normal or reversed polarity).

In another embodiment with a mechanical latch, a capacitor in parallel with the relay is also connected to the sensor. When the sensor conductor detects a leakage current, current flows through the relay and at the same time charges the capacitor. When the current reaches a threshold level required to operate the coil, the relay contacts will open and current will continue to flow from the capacitor to allow the contacts to mechanically latch open, disconnecting the load lines before the relay. The relay contacts will remain latched until the contacts are mechanically reset. Once the contacts have latched, no current will flow to the appliance. In this embodiment the current is not limited to .005 amps since, when the contacts are open, the coil is no longer conducting.

## BRIEF DESCRIPTION OF THE DRAWINGS

Figure 1 is a circuit diagram for a first embodiment of a simple immersion detection current interruptor circuit for small appliances using a mechanical latch, with the sensor always conducting.

Figure 2 is a circuit diagram of an alternate embodiment of the circuit of Figure 1 in which the sensor lead and all load leads to the appliance are opened.

Figure 3 is a cut-away plan view showing the circuit of Figure 1 installed in the plug of a hand-held hair dryer.

Figure 4 is a cut-away plan view showing the circuit of Figure 2 installed in the housing of a hand-held hair dryer.

## DESCRIPTION OF THE PREFERRED EMBODIMENT

The shock protection device of the present invention is a simple, reliable, inexpensive immersion detection current interrupter circuit which addresses the hazard of possible severe, even fatal, electrical shock to a person if a hand-supported appliance is dropped into a conductive fluid such as water. Since non-distilled water is a conductive fluid and the hand-held hair dryer is the small appliance most frequently used in close proximity to water, resulting in statistically significant injuries especially among children, the present invention will be described in an embodiment useful in said hair dryers. It is to be understood that the invention is not limited thereto.

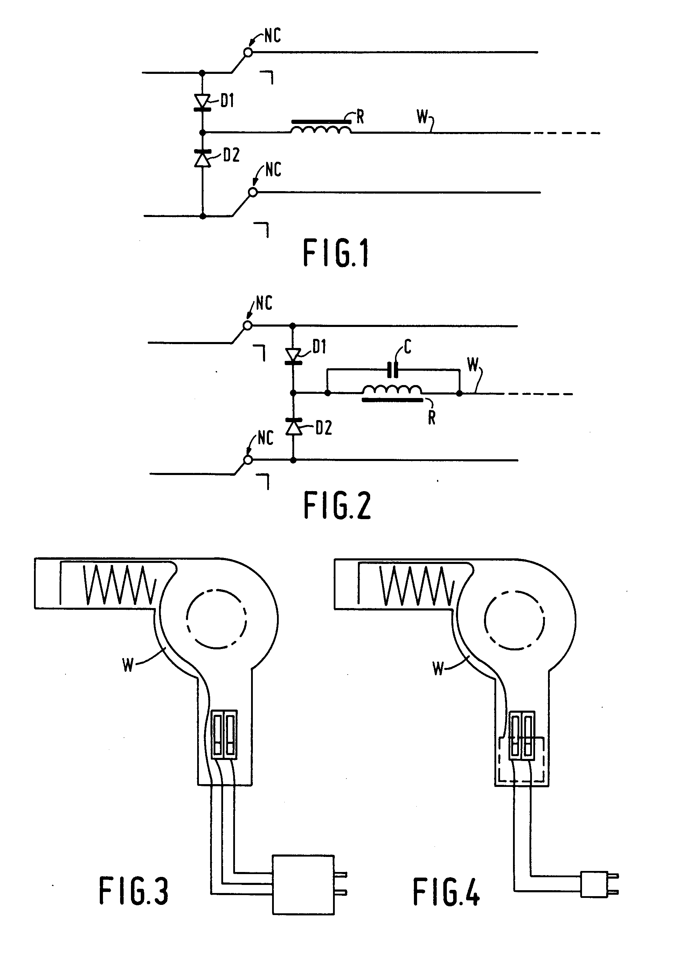

Figure 1 is a circuit diagram of a first embodiment of the simple shock protection device of the present invention. A special sensor conductor W in the form of at least one uninsulated (exposed) wire is positioned in various parts of the small appliance to sense leakage currents when the sensor comes into contact with a conductive fluid such as water. The sensor wire is positioned so that it will conduct a leakage current over the shortest path to ground, either the external ground or the internal ground of the appliance. The sensor leads are positioned at locations in the appliance where the water path to the ground would normally be shorter than the path from the hot lead to ground. It may also be in close proximity to one or both of the power leads or an additional ground wire. Thus, in some cases conduction may be between the sensor lead and one of the power leads, depending upon polarity. In some cases the sensor lead would be placed as close as possible to the ground lead, thus making a shorter sensor current path when the appliance is placed under water. The precise positioning of the sensor lead is critical to the effectiveness of the interrupter, and will depend on the configuration of the appliance in which it is installed. In any case it should be close to the power leads also.

A solenoid or two-pole double-throw relay R is connected via a pair of diodes D1, D2 between the two power leads through the sensor lead W to ground. When a path is provided between the sensor lead W and gound sufficient to cause the solenoid or relay R to activate, the relay contacts mechanically latch into an open position. Once latched, the power leads to the appliance are disconnected, but not the lead to the sensor. The sensor will cause the relay to operate and a mechanical latch will hold the contacts open. The relay will remain latched until it is mechanically reset. Once the relay or solenoid contacts have latched, the maximum current drawn by the sensor to ground will be limited by the design of the coil. Typically the current will always be less than .005 amps. The diodes D1 and D2 maintain a dc current of less than .005 amps on the relay until the unit is unplugged. However, they are not used to hold the contacts open.

The circuit of Figure 1 is thus the simplest circuit with the minimum number of components needed to effect a current interrupter, thereby yielding a very reliable circuit which is very inexpensive to manufacture and hence appropriate for low cost small consumer aplliances.

In the alternate embodiment illustrated in Figure 2, the same sensor and relay connections are present. However, this embodiment utilizes a mechanical latch which opens all leads to the appliance. The latch is placed between the power source and the relay. This embodiment also uses a capacitor C connected in parallel with the coil of the relay. When a conductive fluid is detected, the sensor causes a current to both flow through the relay coil and charge the capacitor at the same time. When the current reaches the level required to operate the relay, the contacts open and current flows from the capacitor through the relay coil allowing the contacts to mechanically latch open. After the contacts latch, no current flows to the appliance because all leads including the sensor lead are disconnected.

In both embodiments one or two relays or solenoids may be used.

The circuits of both embodiments are not easily resettable. The circuits may be reset by mechanically resetting the latch, which for safety reasons may require a special tool or opening the housing. Of course, the unit should be dry to be reset.

The device of the present invention is a simple, reliable and inexpensive immersion detection current interrupter circuit which can be incorporated within the housing of a hand-held appliance as shown in Figure 4, said circuit being used to disconnect power to the appliance via a relay or solenoid. In order to prevent bodily injury, the triggering current required to energize the relay must be kept about 5mA. This threshold level allows for leakage currents that are inherent in most electrical devices and minimizes false triggers. This current level may be achieved by the design of the relay coil to the limiting value, as in Figure 1.

When a conductive fluid comes into contact with the immersion detector or sensor within the housing, current will flow through the fluid to ground, triggering the control circuit to disconnect the appliance from the ac iine. An additional feature of this immersion detector current interrupter is that the protection is available to the user whether the hand supported appliance is switched off or on, that is, protection is available whenever the appliance is energized in the presence of a hazardous condition. This is the case for both embodiments.

The circuits of Figures 1 and 2 can be incorporated within the housing of a small appliance as shown in Figure 4, in which case only a two-wire power cord is required. Alternatively, the circuits could be incorporated within the power plug as shown in Figure 3, in which case a threewire cord is required, the third wire being the sensor lead. This sensor lead outside the appliance housing could be a wire mesh around the power leads, or a bare wire with a loose porous sleeve around one or both of the power leads. Within the appliance, the sensor could be a conductive strip, a conductive coating or a ring. The sensor could be one or more wires, at least one of which is in close proximity to the power leads or an additional ground wire. In certain cases, conduction may be between a sensor lead and one of the power leads, depending on polarity of the leads. In any event, the sensor should be close to the power lines to provide a good path for conduction in water.

In the embodiment illustrated in Figure 1, the diodes are drawn for a particular current direction. It should be obvious that the diodes could be reversed so that current will flow in the opposite direction.

The circuits of Figures 1 and 2 both operate independently of the polarity of the power lines. The AC line plug could be reversed without affecting their operation.

Most importantly, the circuits of Figures 1 and 2 are immune to electrical noise and will not false trigger or noisance trigger.

While the present UL 859 standard requires a shock protective circuit only when the appliance power switch is in the "off" position, it is anticipated that this requirement will be extended to cover the "on" position of the switch. In any event, the circuits of the present invention work with the power switch in either position. The shock protection is available any time the unit is energized.

The advantage of the embodiments of the present invention is that they provide the lowest possible cost and fewest components for a shock protection circuit which is fast and reliable but not easily or accidentally resettable. In the first embodiment, after latching, the current in the sensor is limited to safe levels until the appliance is unplugged. In the second, all leads are broken. Furthermore, if either shock protection circuit is placed in the appliance plug, n o components of the appliance are required to be sealed.

A further advantage of the two embodiments is that each embodiment will operate even if one of the two power leads should be broken or interrupted. Such a break can happen through excessive flexing or other abuse of the power cord of a small appliance.

## Claims

1. A shock protection circuit for use in a small, hand-held electrical appliance, the circuit comprising

    two power leads to couple a supply voltage to a load,

    an electrical connection comprising two diodes (D1, D2) coupled in series between the power leads,

    a sensor means (W) coupled to the electrical connection, between the diodes (D1, D2), to detect the presence of a leakage current within the appliance,

    a means coupled between the diodes (D1, D2) and the sensor means (W) to interrupt the power leads in case of a leakage current above a threshold limit being detected,

    a means to latch the power leads in an open state, and

    a means to limit a current through the sensor means, characterised in that

    the means to interrupt the voltage supply comprises a solenoid (R) to set the power leads into the open state when a leakage current above a threshold limit flows through the series connection of the solenoid, the sensor means and either of the diodes.

2. A circuit as claimed in claim 1, characterised in that the means to interrupt (R) comprises a relais, the solenoid being a part of the relais.

3. A circuit as claimed in claim 1 or 2, the sensor means comprising a wire (W) positioned throughout the appliance, characterised in that the wire is in close proximity to the power leads.

4. A circuit as claimed in claim 1, 2 or 3, characterised in that the means to latch comprises a mechanical latch.

5. A circuit as claimed in claim 1, 2, 3 or 4, characterised in that the means to interrupt (R) comprises at least one switch controlled by the solenoid, the switch being coupled between the load and the diodes.

6. A circuit as claimed in claim 1, 2, 3, 4 or 5, the means to limit comprising a resistance, characterised in that the resistance is incorporated in the solenoid (R).

7. A circuit as claimed in claim 1, 2, 3 or 4, characterised in that the means to interrupt (R) comprises at least one switch controlled by the solenoid, the switch being coupled between the power source and the diodes.

8. A circuit as claimed in claim 7, characterized in that the means to latch comprises a capacitor (C) coupled in parallel to the solenoid.

9. A circuit as claimed in claim 1, 2, 3, 4, 7 or 8, characterized in that the means to limit is an electrical disconnection of the sensor means.

## Patentansprüche

1. Berührungsschutzschaltung zur Anwendung in einem kleinen elektrischen Handapparat, die zwei Stromleiter zum Weiterleiten einer Speisespannung nach einer Belastung, eine elektrische Verbindung mit zwei Dioden (D1, D2) in Reihenschaltung zwischen den Stromleitern, einen mit der elektrischen Verbindung gekoppelten Fühler (W) zwischen den Dioden (D1, D2) zum Detektieren von Leckstrom im Apparat, einen Unterbrecher zwischen den Dioden (D1, D2) und dem Fühler (W) zum Unterbrechen der Stromleiter beim Detektieren von Leckstrom über einem Schwellenwert, ein Mittel zum Verriegeln der Stromleiter in offenem Zustand, und einen Begrenzer zum Begrenzen eines Stroms durch den Fühler enthält, dadurch gekennzeichnet, daß der Unterbrecher für die Spannungsquelle ein Solenoid (R) zum Umschalten der Stromleiter in den offenen Zustand enthält, daß ein Leckstrom über einem Schwellenwert der Reihenschaltung des Solenoids, des Fühlers und jeder der Dioden durchfließt.

2. Schaltung nach Anspruch 1, dadurch gekennzeichnet, daß der Unterbrecher (R) ein Relais enthält, von dem das Solenoid ein Teil ist.

3. Schaltung nach Anspruch 1 oder 2, wobei der Fühler einen durch das ganze Apparat verlegten Draht (W) enthält, dadurch gekennzeichnet, daß der Draht sich ganz nah bei den Stromleitern befindet.

4. Schaltung nach Anspruch 1, 2 oder 3, dadurch gekennzeichnet, daß das Verriegelungsmittel eine mechanische Verriegelung umfaßt.

5. Schaltung nach Anspruch 1, 2, 3 oder 4, dadurch gekennzeichnet, daß der Unterbrecher (R) wenigstens einen vom Solenoid gesteuerten Schalter enthält, der zwischen die Belastung und die Dioden angeschlossen ist.

6. Schaltung nach Anspruch 1, 2, 3, 4 oder 5, wobei der Begrenzer einen Widerstand enthält, dadurch gekennzeichnet, daß der Widerstand in das Solenoid (R) aufgenommen ist.

7. Schaltung nach Anspruch 1, 2, 3 oder 4, dadurch gekennzeichnet, daß der Unterbrecher (R) wenigstens einen vom Solenoid gesteuerten Schalter enthält, der zwischen die Energiequelle und die Dioden angeschlossen ist.

8. Schaltung nach Anspruch 7, dadurch gekennzeichnet, daß das Verriegelungsmittel einen Kondensator (C) in Parallelschaltung zum Solenoid enthält.

9. Schaltung nach Anspruch 1, 2, 3, 4, 7 oder 8, dadurch gekennzeichnet, daß der Begrenzer einen elektrischen Abschalter des Fühlers ist.

**Revendications**

1. Circuit de protection contre des chocs à utiliser dans un petit appareil électrique manuel, comportant

deux conducteurs d'alimentation peur coupler une tension d'alimentation à une charge,

une connexion électrique comportant deux diodes (D1, D2) montées en série entre les conducteurs d'alimentation,

un moyen détecteur (W) couplé à la connexion électrique, entre les diodes (D1, D2) pour détecter la présence d'un courant de fuite dans l'appareil,

un moyen couplé entre les diodes (D1 et D2) et le moyen détecteur (W) pour interrompre les conducteurs d'alimentation dans le cas d'un courant de fuite au-dessus d'une limite de seuil détectée,

un moyen pour verrouiller les conducteurs d'alimentation à l'état ouvert et

un moyen pour limiter un courant traversant le moyen détecteur,

caractérisé en ce que le moyen pour interrompre l'alimentation comporte un solénoïde (R) pour établir les conducteurs d'alimentation à l'état ouvert et en ce qu'un courant de fuite au-dessus d'une limite de seuil circule à travers la série comprenant le solénoïde, le moyen détecteur et l'une des diodes.

2. Circuit selon la revendication 1, caractérisé en ce que le moyen d'interruption (R) comporte un relais, le solénoïde étant une partie du relais.

3. Circuit selon la revendication 1 ou 2, dans lequel le moyen détecteur comporte un fil (W) s'étendant à travers l'appareil, caractérisé en ce que le fil se trouve à étroite proximité des conducteurs d'alimentation.

4. Circuit selon la revendication 1, 2 ou 3, caractérisé en ce que le moyen de verrouillage comporte un verrou mécanique.

5. Circuit selon la revendication 1, 2, 3 ou 4, caractérisé en ce que le moyen d'interruption (R) comporte au moins un interrupteur commandé par le solénoïde, l'interrupteur étant inséré entre la charge et les diodes.

6. Circuit selon la revendication 1, 2, 3, 4 ou 5, dans lequel le moyen de limitation comporte une résistance, caractérisée en ce que la résistance est incorporée dans le solénoïde (R).

7. Circuit selon la revendication 1, 2, 3 ou 4, caractérisé en ce que le moyen d'interruption (R) comporte au moins un interrupteur commandé par le solénoïde, l'interrupteur étant inséré entre la source d'alimentation et les diodes.

8. Circuit selon la revendication 7, caractérisé en ce que le moyen de verrouillage comporte un condensateur (C) monté en parallèle avec le solénoïde.

9. Circuit selon la revendication 1, 2, 3, 4, 7 ou 8, caractérisé en ce que le moyen de limitation est une déconnexion électrique du moyen détecteur.

FIG.1

FIG.2

FIG.3

FIG.4